# EUROPÄISCHE PATENTANMELDUNG

(11) **EP 2 466 364 A1**
(43) Veröffentlichungstag der Anmeldung: **20.06.2012**
(21) Anmeldenummer: 11009590.8
(22) Anmeldetag: 06.12.2011
(51) Int. Cl.: G02C 7/08

(54) **Vorrichtung mit einer Brillenlinse mit veränderbarer Wirkung sowie Verfahren zum Einstellen der Wirkung einer Brillenlinse**

(30) Priorität: 20.12.2010 DE 102010055185
(71) Anmelder: Carl Zeiss Vision GmbH, 73430 Aalen (DE)
(72) Erfinder: Liebich, Simone, 73433 Aalen (DE); Kelch, Gerhard, 73434 Aalen (DE)
(74) Vertreter: Carl Zeiss AG - Patentabteilung

(57) **Zusammenfassung**

Die Erfindung betrifft eine Vorrichtung (100) mit einer Brillenlinse (2) mit veränderbarer optischer Wirkung und mit einer Wirkungseinstelleinrichtung (3) zum Einstellen der optischen Wirkung der Brillenlinse (2) anhand von Solleinstelldaten. Erfindungsgemäß sind eine Speichereinrichtung (4) zum Speichern von ersten Solleinstelldaten zum Einstellen einer ersten vorbestimmten, aus einer ersten Refraktionsmessung an einem Auge eines Brillenträgers, für den die Brillenlinse (1) bestimmt ist, ermittelten optischen Sollwirkung und von zweiten Solleinstelldaten zum Einstellen einer zweiten vorbestimmten, aus einer zweiten Refraktionsmessung an dem Auge ermittelten optischen Sollwirkung sowie eine Zuführeinrichtung (5), um die ersten Solleinstelldaten oder die zweiten Solleinstelldaten der Wirkungseinstelleinrichtung (3) zuzuführen, vorgesehen. Die Erfindung betrifft ferner auch ein Verfahren zum Einstellen der optischen Wirkung einer Brillenlinse (2) mit veränderbarer optischer Wirkung anhand von Solleinstelldaten.

## Beschreibung

Die Erfindung betrifft eine Vorrichtung mit einer Brillenlinse mit veränderbarer Wirkung nach dem Oberbegriff des Patentanspruchs 1 sowie ein Verfahren zum Einstellen der Wirkung einer Brillenlinse mit veränderbarer Wirkung nach dem Oberbegriff des Patentanspruchs 9.

Es ist bekannt, dass die Sehleistung eines menschlichen Auges von den Umgebungsbedingungen abhängt. Insbesondere haben sowohl die Umgebungsbeleuchtung als auch der Kontrast des betrachteten Objekts einen Einfluss auf das Sehvermögen. Als Beispiel des Einflusses der Umgebungsbeleuchtung sei das Phänomen der Nachtmyopie, also der Kurzsichtigkeit unter mydriatischen Bedingungen, genannt. Die Kontrastempfindlichkeit wiederum hängt von der Ortsfrequenz des betrachteten Objekts ab. So zeigt z.B. die Figur 2 in der DE 10 2004 055 754 A1 einen typischen Verlauf der Kontrastempfindlichkeit über der Ortsfrequenz, angegeben in cycles per degree (cpd).

Beiden Phänomenen ist gemeinsam, dass sie die Sehleistung unterschiedlicher Personen in unterschiedlicher Weise beeinflussen. Jedes Individuum ist also in unterschiedlicher Weise sensitiv gegenüber der Umgebungsbeleuchtung und dem Kontrast.

In jüngster Zeit sind Geräte und Verfahren entwickelt geworden, die es gestatten, die Refraktion des Auges individuell unter Berücksichtigung unterschiedlicher Umgebungsbedingungen zu ermitteln. So hat beispielsweise die Firma Carl Zeiss Vision GmbH unter der Bezeichnung iProfiler ein Messgerät zur Bestimmung der objektiven Refraktion auf dem Markt, welches nach dem sogenannten iScription-Verfahren Verordnungen berechnet. Letztgenanntes Verfahren berücksichtigt unterschiedliche Umgebungsbedingungen bei der Berechnung der Refraktionswerte für die der fehlsichtigen Person verordneten Brille. Die DE 10 2007 032 564 A1 lehrt eine subjektive Refraktion und eine Mehrzahl objektiver Refraktionen für eine Vielzahl unterschiedlicher Randbedingungen, wie Helligkeit, Kontrast usw. zu ermitteln. Aus der Mehrzahl objektiver Refraktionen wird dann eine effektive objektive Refraktion bestimmt. Diese wird dann mit der objektiven Refraktion verglichen und die Abweichungen werden bestimmt. Die Sollwerte für das Brillenglas werden dann aus der effektiven objektiven und der subjektiven Refraktion bestimmt.

In beiden Fällen wird die verordnete Wirkung der Brille aus einer -unter Umständen auch gewichteten- Mittelung unterschiedlicher Bedingungen berechnet. Sie stellt daher einen mehr oder weniger gelungenen Kompromiss dar.

Aus dem Stand der Technik sind auch sogenannte elektroaktive Elemente bekannt. Die US 2008/0180630 A1 beschreibt z.B. ein zwischen einer ersten optischen Wirkung und einer zweiten optischen Wirkung umschaltbares Element. Um die erste optische Wirkung zu erzeugen, befindet sich das Element in einem deaktivierten Zustand, d.h. die an die Elektroden angelegte(n) Spannung(en) ist (sind) unterhalb eines Schwellwerts. Zur Erzeugung der zweiten optischen Wirkung befindet sich das Element in einem aktivierten Zustand, d.h. die an die Elektroden angelegte(n) Spannung(en) ist (sind) oberhalb eines Schwellwerts. Die optische Wirkung des elektroaktiven Elements kann auch "durchstimmbar" ausgebildet sein.

Weiter ist in diesem Dokument eine elektro-aktive Linse zur Korrektur der Altersfehlsichtigkeit beschrieben. Nahteil und ggf. Progressivteil der Linse sind elektroaktiv zuschaltbar ausgebildet, um bei Bedarf die fehlende oder beeinträchtigte Akkommodationsfähigkeit des Auges zu korrigieren.

Die US 2007/0280626 A1 und die WO 2008/002388 A2 beschreiben elektro-aktive Linsen, die mit einem Abstandssensor ausgestattet sind, um die Brechkraft der Linse automatisch an unterschiedliche Objektentfernungen anpassen zu können.

Die vorstehend beschriebenen elektroaktiven Linsen werden für ophthalmische Anwendungen in ihrer Brechkraft allein im Hinblick auf die gewünschte(n) Objektentfernung(en) eingestellt. Sonstige Parameter gehen nicht ein.

Die DE 102 39 689 A1 beschreibt eine Brillenanordnung mit einer adaptiven Linse, bei der eine vom Auge reflektierte Strahlung detektiert wird und in Abhängigkeit von dem Detektionssignal die Brechwirkung der Linse lokal verändert wird. Dadurch ergibt sich eine adaptive Brille, die die Adaption für das vom Auge betrachtete Objekt vornimmt und dabei gleichzeitig etwaige Abbildungsfehler durch das Auge korrigiert. Um die gewünschte Funktion sicherzustellen, ist ein extrem hoher technischer Aufwand erforderlich.

Die Aufgabe der Erfindung besteht daher darin, eine Vorrichtung mit einer adaptiven Brillenlinse bereitzustellen, welche vergleichsweise einfach aufgebaut ist, aber die Sensitivität der Sehleistung gegenüber unterschiedlichen Umgebungsbedingungen, insbesondere gegenüber der Umgebungsbeleuchtung und dem Kontrast, berücksichtigt. Eine weitere Aufgabe der Erfindung besteht darin, ein vergleichsweise einfaches Verfahren zum Einstellen einer adaptiven Brillenlinse bereitzustellen, welches die Sensitivität der Sehleistung gegenüber unterschiedlichen Umgebungsbedingungen, insbesondere gegenüber der Umgebungsbeleuchtung und dem Kontrast, berücksichtigt.

Die erste Aufgabe wird durch eine Vorrichtung mit den Merkmalen des Patentanspruchs 1 gelöst. Die weitere Aufgabe wird durch ein Verfahren mit den Merkmalen des Patentanspruchs 8 gelöst.

Vorteilhafte Ausführungen und Weiterbildungen der Erfindung sind in den Unteransprüchen angegeben.

Die erfindungsgemäße Vorrichtung umfasst eine Brillenlinse mit veränderbarer optischer Wirkung und eine Wirkungseinstelleinrichtung, um die optische Wirkung der Brillenlinse anhand von Solleinstelldaten auf eine vorgegebene optische Sollwirkung einzustellen. Eine Brillenlinse mit veränderbarer optischer Wirkung kann z.B. in Form einer der in der WO 2008/027890 A2 oder der WO 2008/033290 A2 oder der US 2007/0280626 A1 oder der US 2007/0290972 A1 oder der US 2008/0180630 A1 beschriebenen elektrooptischen Linse ausgeführt sein. Im Allgemeinen ist eine zweidimensionale Struktur vorgesehen, deren optischen Eigenschaften mit Hilfe von in Form einer Schaltmatrix angeordneten Elektroden lokal verändert werden können. Die Wirkungseinstelleinrichtung kann z.B. als Spannungsgeber, wie in der US 2008/0180630 A1 beschrieben, ausgeführt sein, um z.B. die in Form einer Schaltmatrix angeordneten Elektroden mit unterschiedlichen Spannungen zu beaufschlagen.

Weiter ist nach der Erfindung eine Speichereinrichtung zum Speichern von wenigstens zwei unterschiedlichen Solleinstelldaten für unterschiedliche optische Sollwirkungen vorgesehen. Unter optischen Solleinstelldaten sind ggf. codierte Größen zu verstehen, anhand derer die

Wirkungseinstelleinrichtung in der Lage ist, die gewünschten Sollwirkungen einzustellen. Die erste optische Sollwirkung, die in Form von Solleinstelldaten in der Speichereinrichtung hinterlegt ist, wurde zuvor aus einer ersten Refraktionsmessung an einem Auge eines Brillenträgers, für den die Brillenlinse bestimmt ist, ermittelt. Die zweite optische Sollwirkung, die ebenfalls in Form von Solleinstelldaten in der Speichereinrichtung hinterlegt ist, wurde zuvor aus einer zweiten Refraktionsmessung an dem Auge des Brillenträgers ermittelt, für den die Brillenlinse mit veränderbarer optischer Wirkung bestimmt ist.

Die erfindungsgemäße Vorrichtung umfasst ferner eine Zuführeinrichtung, um die in der Speichereinrichtung hinterlegten Solleinstelldaten, insbesondere die ersten Solleinstelldaten oder die zweiten Solleinstelldaten, der Wirkungseinstelleinrichtung zuzuführen. Die Zuführeinrichtung stellt also eine Art Datenleitung dar, die zum Transfer der gewünschten Solleinstelldaten an die Wirkungseinstelleinrichtung dient, die dann wiederum z.B. die zur Einstellung der gewünschten optischen Sollwirkung erforderlichen Elektrodensignale bereitstellt.

Das erfindungsgemäße Verfahren zum Einstellen der optischen Wirkung einer Brillenlinse mit veränderbarer optischer Wirkung anhand von Solleinstelldaten ist in entsprechender Weise dadurch gekennzeichnet, dass zunächst eine erste Refraktionsmessung an dem Auge des Brillenträgers durchgeführt wird, für den die Brillenlinse bestimmt ist. Die Refraktionsmessung kann z.B. bei einem Augenarzt oder auch bei einem Optiker durchgeführt werden. Es kann sich um eine objektive Refraktionsmessung handeln, die mittels einer apparativen Anordnung gemessen und durch die Brechungseigenschaften des Augapfels bestimmt wird, oder um eine subjektive Refraktionsmessung, die eine Auskunft des Untersuchten über die wahrgenommene Bildschärfe erfordert und den Einfluss weiterer Größen auf die Wahrnehmung berücksichtigt. Es ist auch möglich, dass die Refraktionsmessung Informationen sowohl einer objektiven als auch einer subjektiven Refraktionsmessung beinhaltet. Selbstverständlich ist es insbesondere auch möglich, dass die Refraktionsmessung aus einer Mehrzahl von Refraktionsmessungen durch u.U. auch gewichtete Mittelung bestimmt wird. Anhand der ersten Refraktionsmessung wird dann eine erste optische Sollwirkung der Brillenlinse bestimmt. Die zugehörigen Einstelldaten anhand derer die erste optische Sollwirkung bei der Brillenlinse eingestellt werden kann, werden dann als erste Solleinstelldaten abgespeichert.

Dann wird eine zweite Refraktionsmessung an dem Auge des Brillenträgers durchgeführt, für den die Brillenlinse bestimmt ist. Anhand der zweiten Refraktionsmessung, die wie die erste Refraktionsmessung auf unterschiedlichste Weise durchgeführt werden kann, wird dann eine zweite von der ersten optischen Sollwirkung abweichende optische Sollwirkung der Brillenlinse bestimmt. Die zugehörigen Einstelldaten anhand derer die zweite optische Sollwirkung bei der Brillenlinse eingestellt werden kann, werden dann als zweite Solleinstelldaten abgespeichert. In entsprechender Weise können noch weitere auf Basis von Refraktionsmessungen ermittelte optische Sollwirkungen in Form von entsprechenden Solleinstelldaten abgespeichert werden.

Erfindungsgemäß wird die optische Wirkung der Brillenlinse dann anhand der ersten Solleinstelldaten und/oder der zweiten Solleinstelldaten und/oder der ggf. weiteren abgespeicherten Solleinstelldaten eingestellt.

Die erste optische Sollwirkung, die bei der erfindungsgemäßen Vorrichtung in der Speichereinrichtung hinterlegt ist oder die nach dem erfindungsgemäßen Verfahren abgespeichert wird, kann eine aus einer unter einer ersten Umgebungsbeleuchtungsbedingung durchgeführte Refraktionsmessung an dem Auge ermittelte zur Korrektur der Fehlsichtigkeit des Auges dienende optische Wirkung sein und die zweite optische (und ggf. eine oder mehrere weitere) Sollwirkung(en) kann (bzw. können) eine (bzw. mehrere) aus einer (bzw. mehreren) unter einer von der ersten Umgebungsbeleuchtungsbedingung abweichenden zweiten (bzw. weiteren) Umgebungsbeleuchtungsbedingung durchgeführten Refraktionsmessung an dem Auge ermittelte optische Wirkung zu Korrekturzwecken sein. Unter Umgebungsbeleuchtungsbedingung ist die Beleuchtungsbedingung zu verstehen, die bei der Durchführung der Refraktionsmessung in der Umgebung des Probanden herrscht und die Sehleistung beeinflusst. Neben der Umgebungshelligkeit und/oder alternativ zu der Umgebungshelligkeit kann auch das Beleuchtungsspektrum eine Rolle spielen.

Es ist bekannt, dass sich die beste Korrektur einer Fehlsichtigkeit des Auges abhängig von den jeweiligen Bedingungen, bei denen das Sehen stattfindet, ändert. Diese Veränderungen sind außerdem von Person zu Person höchst unterschiedlich. Es ist daher möglich, dass die abgespeicherten bzw. die in der Speichereinrichtung in Form von Solleinstelldaten hinterlegten der Korrektur des fehlsichtigen Auges dienenden Sollwirkungen im Hinblick auf die jeweiligen Umgebungsbeleuchtungsbedingungen optimiert sind. Anders ausgedrückt kann auch die Korrekturwirkung der Brillenlinse selbst bei der in Form von Solleinstelldaten abgespeicherten Sollwirkungen berücksichtigt werden.

Die erste optische Sollwirkung kann auch eine aus einer unter einer ersten Kontrastbedingung durchgeführten Refraktionsmessung an dem Auge ermittelte Wirkung sein und die zweite (bzw. ggf. weitere) optische Sollwirkung(en) kann (bzw. können) eine (bzw. weitere) aus einer unter einer zweiten (bzw. weiteren) von der ersten Kontrastbedingung abweichenden zweiten (bzw. weiteren) Kontrastbedingung(en) durchgeführten Refraktionsmessung(en) an dem Auge ermittelte Wirkung(en) sein. Unter Kontrastbedingung versteht man das Wertepaar Ortsfrequenz und Kontrast aus der Figur 2 in der bereits in der Beschreibungseinleitung genannten Druckschrift DE 10 2004 055 754 A1, also die Koordinaten eines Punktes in diesem Diagramm. Die jeweils ermittelten Sollwirkungen sind vorzugsweise diejenigen, bei denen die Kontrastempfindlichkeit bei einer bestimmten Ortsfrequenz am höchsten ist.

Die für eine jeweilige Person erforderliche beste Korrektur einer Fehlsichtigkeit des Auges ändert sich auch in Abhängigkeit von den jeweiligen Kontrastbedingungen, bei denen das Sehen stattfindet. Diese Bedingungen sind individuell höchst unterschiedlich. Die individuelle Kontrastempfindlichkeit kann durch unterschiedliche Methoden, z.B. den sogenannten Ginsburg-Test oder das in dem Dokument DE 10 2004 055 754 A1 beschriebene Verfahren ermittelt werden. Der Einfluss unterschiedlicher Brillenglasverordnungen auf das Kontrastsehen kann ebenfalls durch diese Tests herausgefunden werden. So lässt sich für jede Ortsfrequenz (angegeben in cycles per degree, cpd) diejenige optische Wirkung eines Brillenglases, also z.B. entsprechende Werte für Sphäre, Zylinder und Achse, bestimmen, welche die Kontrastempfindlichkeit des Auges an diesem cpd-Wert maximiert.

Die erfindungsgemäße Vorrichtung kann eine Umschalteinrichtung zum Umschalten der Zuführeinrichtung zwischen dem Zuführen der in der Speichereinrichtung abgespeicherten ersten Solleinstelldaten und dem Zuführen der in der Speichereinrichtung abgespeicherten zweiten Solleinstelldaten und ggf. dem Zuführen weiterer in der Speichereinrichtung abgespeicherter Solleinstelldaten aufweisen. Das Umschalten kann manuell oder automatisch erfolgen. Ein Umschalten zwischen unterschiedlichen zuvor über Refraktionsmessungen ermittelten optischen Wirkungen ermöglicht eine Anpassung der Korrekturwirkung der Brillenlinse an unterschiedliche Umgebungsbedingungen. So ist es z.B. möglich zwischen Tagrefraktion und Nachtrefraktion umzuschalten. Eine Brille mit entsprechenden Brillengläsern ermöglicht dem Träger optimales Sehen unter Tageslichtbedingungen und bei Dämmerung bzw. Dunkelheit. Die bis dato vorherrschende Kompromisslösung aufgrund der Annahme eines "mittleren Pupillenradius" bei der Berechnung der Bestellwerte (Verordnung) für die Brille gehört damit der Vergangenheit an.

Günstig ist es, wenn die Beleuchtungsverhältnisse in der Umgebung der eine Brille mit der erfindungsgemäß mit Zusatzkomponenten ausgestatteten Brillenlinse tragenden Person bestimmt werden und die optische Wirkung der Brillenlinse zwischen der ersten optischen Sollwirkung und der zweiten optischen Sollwirkung (oder ggf. weiteren optischen Sollwirkungen, insbesondere zuvor ermittelter und abgespeicherter oder auch rechnerisch aus den abgespeicherten Solleinstelldaten interpolierten Solleinstelldaten) in Anhängigkeit von der jeweiligen momentan bestimmten Umgebungsbeleuchtung umgeschaltet wird. Bei hinreichender Anzahl abgespeicherter unterschiedlicher Solleinstelldaten und/oder durch rechnerische Interpolation gewonnener Solleinstelldaten ist auch eine kontinuierliche Einstellung möglich.

Die erfindungsgemäße Vorrichtung kann zu diesem Zweck einen Umgebungsbeleuchtungssensor zum Bestimmen eines Maßes für die Beleuchtungsverhältnisse in der Umgebung der die Brillenlinse tragenden Person sowie eine Umgebungsbeleuchtungssteuereinrichtung zum Ansteuern der Umschalteinrichtung in Abhängigkeit von dem von dem Umgebungsbeleuchtungssensor bestimmten Maß für die Beleuchtungsverhältnisse in der Umgebung der die Brillenlinse tragenden Person. Der Umgebungsbeleuchtungssensor kann z.B. ausgebildet sein, um die jeweils herrschende Leuchtdichte zu bestimmen. Unterhalb einer vorbestimmten Leuchtdichte kann die Umgebungsbeleuchtungssteuereinrichtung dann z.B. ein Steuersignal an die Umschalteinrichtung senden, die diese veranlasst, die Wirkungseinstelleinrichtung über die Zuführeinrichtung mit den Solleinstelldaten für die Nachtrefraktion zu beaufschlagen. Übersteigt die von dem Umgebungsbeleuchtungssensor bestimmte Leuchtdichte einen bestimmten Schwellwert, der u.U. auch von dem zuvor angegebenen Schwellwert für das Umschalten auf Nachtrefraktion abweichen kann, so kann die Umgebungsbeleuchtungssteuereinrichtung dann z.B. ein Steuersignal an die Umschalteinrichtung senden, das diese veranlasst, die Wirkungseinstelleinrichtung über die Zuführeinrichtung mit den Solleinstelldaten für die Tagrefraktion zu beaufschlagen. Soweit weitere Solleinstellwerte in der Speichereinrichtung hinterlegt sind, kann auch bei Unter- oder Überschreiten entsprechender weiterer Schwellwerte ein Umschalten auf die entsprechenden aus weiteren Refraktionen ermittelten Sollwirkungen, die bei unterschiedlichen Leuchtdichten gewonnen wurden, erfolgen. Damit ist es möglich, die für die aktuell herrschende Beleuchtungssituation passende Wirkung der beiden Brillengläser zu berechnen und einzustellen.

Es hat sich weiter als vorteilhaft herausgestellt, wenn der Ortsfrequenzraum der betrachteten Umgebung der die Brillenlinse tragenden Person bestimmt wird und die optische Wirkung der Brillenlinse zwischen der ersten optischen Sollwirkung und der zweiten optischen Sollwirkung (und ggf. weiterer Sollwirkungen) in Anhängigkeit von der vorherrschenden Ortsfrequenz umgeschaltet wird. Zur Bestimmung des Ortsfrequenzraums können die üblichen Verfahren der Bildverarbeitung (Fourieranalyse, Fouriertransformation) verwendet werden.

Die erfindungsgemäße Vorrichtung kann zu dem vorstehend angegebenen Zweck eine Umgebungskontrastbestimmungseinrichtung zum Bestimmen eines Maßes für ein Kontrastverhältnis in einer Umgebung der die Brillenlinse tragenden Person und eine Kontrastverhältnissteuereinrichtung zum Ansteuern der Umschalteinrichtung in Abhängigkeit von dem bestimmten Maß für das Kontrastverhältnis in der Umgebung der die Brillenlinse tragenden Person aufweisen. Als Umgebungskontrastbestimmungseinrichtung kann z. B. ein Aufnahmegerät, wie beispielsweise eine elektronische Kamera, und ein damit verbundenes Bildauswertungssystem vorgesehen sein, das den Ortsfrequenzbereich des betrachteten Objektbereichs (zumindest in der generellen Richtung der Brille) bestimmt. Die Umschalteinrichtung sorgt dann analog zu obiger Steuerung bzgl. der Beleuchtung für die Umschaltung auf die für diesen Ortsfrequenzbereich bestpassende Wirkung der Brillengläser.

Man erhält eine Brille mit Brillengläsern, deren Korrekturwirkung sich abhängig von den Sehbedingungen in der Umgebung automatisch einstellt. Mit Hilfe eines an der Brille angebrachten geeigneten Aufnahmegeräts (z.B. eine elektronische Kamera) und eines damit verbundenen Bildauswertungssystems wird die vorherrschende Ortsfrequenz des betrachteten Objektbereichs (zumindest in der generellen Richtung der Brille) bestimmt und die dafür bestpassende Wirkung der Brillengläser eingestellt.

Die Erfindung wird nunmehr anhand der Zeichnung näher beschrieben. Es zeigen:
- Figur 1: ein erstes Ausführungsbeispiel einer erfindungsgemäßen Vorrichtung
- Figur 2: einen Autorefraktor nach dem Stand der Technik
- Figur 3: ein Flussdiagramm eines ersten Ausführungsbeispiels für ein erfindungsgemäßes Verfahren

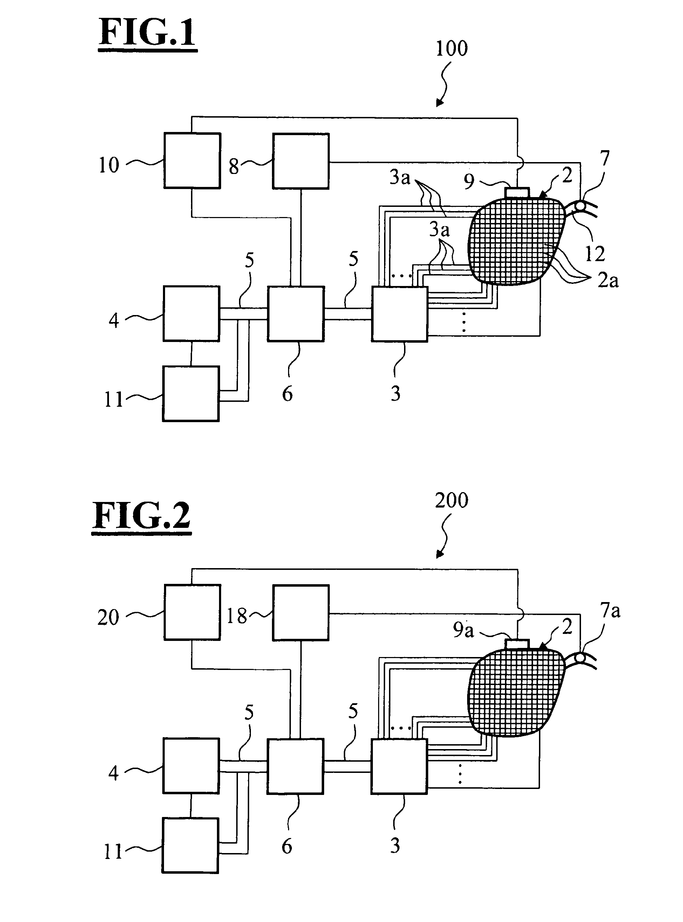

Die Figur 1 zeigt ein erstes Ausführungsbeispiel einer Vorrichtung 100 nach der Erfindung in schematischer Darstellung. Die Vorrichtung 100 umfasst einer Brillenlinse 2 mit veränderbarer optischer Wirkung. Die Brillenlinse 2 weist in dem Ausführungsbeispiel matrixartig angeordnete Elektroden 2a auf, die es erlauben, die optischen Eigenschaften der Brillenlinse 2 lokal mit Hilfe elektrischer Signale zu verändern.

Diese elektrischen Signale, vorzugsweise Spannungssignale, für die Elektroden 2a werden von einer Wirkungseinstelleinrichtung 3 bereitgestellt. Die Wirkungseinstelleinrichtung 3 weist daher eine Vielzahl an (Spannungs-)Signalausgängen auf, die mit den entsprechenden Elektroden 2a über Steuerleitungen 3a verbunden sind. Die Wirkungseinstelleinrichtung 3 weist ferner eine Mehrzahl an Signaleingängen auf, um der Wirkungseinstelleinrichtung 3 Informationen (hier als Solleinstelldaten bezeichnet) zuzuführen, in welcher Weise die Elektroden 2a über die Steuerleitungen 3a angesteuert werden müssen, um eine gewünschte optische Wirkungsverteilung (hier der Einfachheit halber als optische Sollwirkung bezeichnet) über der Linsenfläche zu erhalten.

Die in der Figur 1 gezeigte Vorrichtung 100 umfasst weiter eine Speichereinrichtung 4 zum Speichern von Solleinstelldaten. Erfindungsgemäß ist vorgesehen, dass wenigstens zwei Solleinstelldaten in der Speichereinrichtung 4 hinterlegt sind. Exemplarisch seien dies die Solleinstelldaten, um die optische Wirkung der Brillenlinse 2 so einzustellen, dass deren Korrekturwirkung wahlweise gerade die Sehfehler des Probanden beim gewöhnlichen Tagsehen (erste Solleinstelldaten) oder beim Dämmerungssehen (zweite Solleinstelldaten) ausgleicht. In der Speichereinrichtung können weitere Solleinstelldaten hinterlegt sein, z.B. solche die eine Korrekturwirkung bewirken, die auf unterschiedliche Kontrastverhältnisse abgestimmt ist.

Die Speichereinrichtung 4 ist über eine Zuführeinrichtung, im vorliegenden Ausführungsbeispiel eine Datenleitung 5, mit der Wirkungseinstelleinrichtung 3 verbunden, um die ersten Solleinstelldaten oder die zweiten Solleinstelldaten der Wirkungseinstelleinrichtung 3 zuführen zu können.

Der Zuführeinrichtung 5 ist eine Umschalteinrichtung 6 zwischengeschaltet. Die Umschalteinrichtung 6 dient dazu, wahlweise die ersten oder die zweiten Solleinstelldaten der Wirkungseinstelleinrichtung 3 zuzuführen, die dann wiederum Steuersignale für die Elektroden 2a generiert, um die gewünschte optische Wirkung der Brillenlinse 2 einzustellen.

Die in der Figur 1 dargestellte Vorrichtung 100 umfasst weiter einen Helligkeitssensor 7. Dieser Helligkeitssensor 7 kann wie in der Figur 1 skizziert am Nasenbügel 12 angebracht sein. Der Helligkeitssensor 7 bestimmt die momentan herrschende Leuchtdichte. Er dient damit dazu, ein Maß für die Beleuchtungsverhältnisse in der Umgebung der (nicht dargestellten) die Brillenlinse 2 tragenden Person zu bestimmen. Anstelle eines Helligkeitssensors 7 kann auch ein das Beleuchtungsspektrum aufnehmender Sensor oder beide vorgesehen sein. Weiter ist eine Umgebungsbeleuchtungssteuereinrichtung 8, vorgesehen, die eingangsseitig mit dem Helligkeitssensor 7 und ausgangsseitig mit der Umschalteinrichtung 6 verbunden ist. Diese Umgebungsbeleuchtungssteuereinrichtung 8 dient zum Ansteuern der Umschalteinrichtung 6 in Abhängigkeit von dem bestimmten Maß für die Beleuchtungsverhältnisse in der Umgebung der die Brillenlinse 2 tragenden Person. Anders ausgedrückt veranlasst die Umgebungsbeleuchtungssteuereinrichtung 8 die Umschalteinrichtung 6 zur Umschaltung zwischen den ersten und zweiten Solleinstelldaten, je nachdem, ob die von dem Helligkeitssensor 7 erfasste Leuchtdichte einen bestimmten Schwellwert überschritten hat oder einen ggf. abweichenden Schwellwert unterschritten hat.

Die Vorrichtung 100 umfasst wahlweise weiter eine elektronische Kamera 9 mit integriertem Bildauswertesystem. Die Kamera 9 nimmt im Objektbereich vor der Brille angeordnete Strukturen auf. Das Bildauswertesystem ist durch die Anwendung der Bildverarbeitung (Fourieranalyse, Fouriertransformation) in der Lage, aus den von der Kamera 9 aufgenommenen Bildern die Verteilung der Ortsfrequenzen in der Umgebung, welche die Brillenlinse 2 tragende Person betrachtet, zu bestimmen.

Die Kamera 9 oder genauer gesagt das Bildauswertesystem der Kamera 9 ist über eine leitende Verbindung mit einer Kontrastverhältnissteuereinrichtung 10 verbunden. Ausgangsseitig ist die Kontrastverhältnissteuereinrichtung 10 an den Steuereingang der Umschalteinrichtung 6 angeschlossen. Die Kontrastverhältnissteuereinrichtung 10 dient zum Ansteuern der Umschalteinrichtung 6 in Abhängigkeit von den vorherrschenden Ortsfrequenzen in der Umgebung der die Brillenlinse 2 tragenden Person. Soweit entsprechende Solleinstelldaten in der Speichereinrichtung 4 hinterlegt sind, kann die die Kontrastverhältnissteuereinrichtung 10 die Umschalteinrichtung 6 zur Umschaltung zwischen weiteren Solleinstelldaten veranlassen, je nachdem, welche Ortsfrequenz in der betrachteten Umgebung vorherrschend ist. Die in der Figur 1 dargestellte Vorrichtung 100 umfasst schließlich auch noch eine Recheneinrichtung 11, um aus den in der Speichereinrichtung 4 gespeicherten Solleinstelldaten weitere Solleinstelldaten zu berechnen. Es können also z.B. durch geeignete Interpolationsverfahren für weitere Helligkeitsstufen und/oder Ortsfrequenzen geeignete bzw. optimierte Korrekturwirkungen des Brillenglases 2 berechnet werden. Die Umschalteinrichtung 6 kann dann anhand der von den Sensoren 7, 9 erfassten Umgebungsverhältnisse und gesteuert durch die entsprechenden Einrichtungen 8, 10 auf die jeweils geeignetsten Solleinstelldaten umschalten. Die Zuführeinrichtung 5 sorgt dafür, dass die Solleinstelldaten an die Wirkungseinstelleinrichtung 3 weitergeleitet werden, welche dann wiederum dafür sorgt, dass an den Elektroden 2a die zur Erzeugung der gewünschten optischen Wirkung erforderlichen Spannungssignale anliegen.

Der Vollständigkeit halber sei angemerkt, dass die blockschaltbildartig dargestellten Bestandteile der erfindungsgemäßen Vorrichtung 100 inklusive deren Verbindungsleitungen beispielsweise in einem Brillengestell, insbesondere den Bügeln der entsprechenden Brille angeordnet sein können. Die Bestandteile können für jedes Brillenglas separat oder für beide Brillengläser gemeinsam vorgesehen sein.

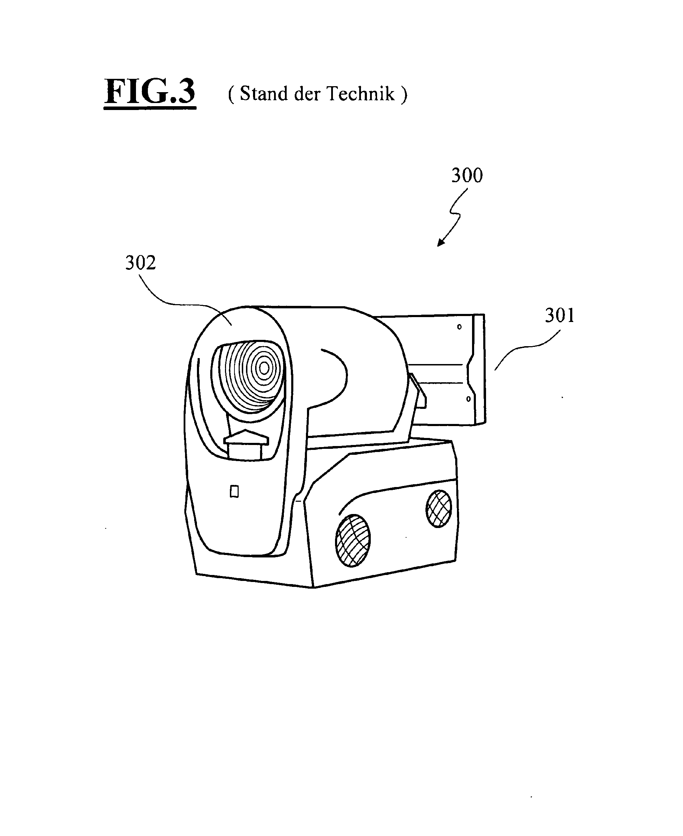

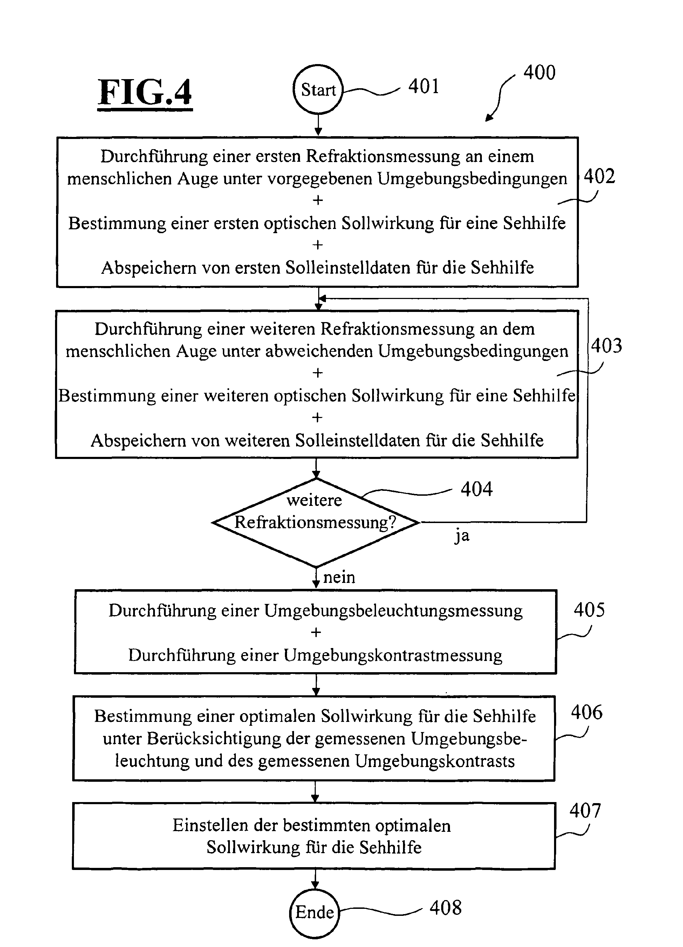

Die Figur 3 zeigt ein Flussdiagramm 400 eines ersten Ausführungsbeispiels eines erfindungsgemäßen Verfahrens zum Einstellen der optischen Wirkung einer Brillenlinse mit veränderbarer optischer Wirkung anhand von Solleinstelldaten. Es beginnt damit (Schritt 401), dass in einem ersten Schritt eine erste Refraktionsmessung an einem menschlichen Auge unter vorgegebenen Umgebungsbedingungen durchgeführt wird, hieraus eine erste optische Sollwirkung für die Brillenlinse abgeleitet wird und die entsprechenden ersten Solleinstelldaten für die Brillenlinse abgespeichert werden (Schritt 402).

Die Refraktionsmessung kann z.B. mittels des in der Figur 2 dargestellten Autorefraktors 300 durchgeführt werden, welcher unter dem Markennamen iProfiler von der Anmelderin angeboten wird. Dieses Gerät 300 umfasst einen Wellenfrontsensor, welcher nach der Methode Hartmann-Shack arbeitet. Es ist möglich, die Bedingungen, unter denen die Refraktionsmessung durchgeführt wird, sehr genau vorzugeben. Insbesondere ist es möglich, die Umgebungsbeleuchtung und die vorherrschende Ortsfrequenz genau festzulegen. So ist es möglich, die rezeptierte Brillenglaswirkung so zu bestimmen, dass die Kontrastempfindlichkeit für eine bestimmte Sehaufgabe bzw. Sehsituation maximiert wird. Als Ergebnis der Refraktionsmessung des Untersuchenden, nämlich einem Optiker oder ggf. auch einem Augenarzt, erhält man Werte für Sphäre, Zylinder und Achse. Die auf diese Weise ermittelte optische Sollwirkung für die Brillenlinse 2 unter den vorstehend angegebenen Bedingungen lässt sich z.B. durch geeignete Wahl von elektrischen Signalen an den Elektroden 2a des vorstehend beschriebenen Brillenglases 2 einstellen. Rechnerisch werden nun die zugehörigen Solleinstelldaten ermittelt, anhand derer z.B. die in der Figur 1 dargestellte Wirkungseinstelleinrichtung 3 die entsprechenden elektrischen Signale erzeugt. Diese Solleinstelldaten werden z.B. in der in der Figur 1 dargestellten Speichereinrichtung 4 abgespeichert.

In einem zweiten Schritt 403 wird eine zweite Refraktionsmessung an dem menschlichen Auge unter anderen Umgebungsbedingungen durchgeführt. So kann z.B. die vorherrschende Ortsfrequenz verändert werden und/oder es kann die Helligkeit und/oder gar das Beleuchtungsspektrum verändert werden, während der die Refraktionsmessung durchgeführt wird. Auch aus dieser Refraktionsmessung wird der vorstehend beschriebenen Anleitung folgend eine weitere optische Sollwirkung für die Brillenlinse abgeleitet und die entsprechenden weiteren Solleinstelldaten für die Brillenlinse abgespeichert. Diese Prozedur kann unter abweichenden Umgebungsbedingungen wiederholt werden, ggf. bis die Speicherkapazität der Speichereinrichtung erschöpft ist (Schritte 404, 403).

Diese Prozedur kann für jedes Auge getrennt durchgeführt werden und die entsprechenden Informationen können in derselben Speichereinrichtung oder in unterschiedlichen Speichereinrichtungen abgelegt werden.

Während die Brille getragen wird, werden fortlaufend die Umgebungsbedingungen in der Umgebung des Brillenträgers gemessen, z.B. mittels der in der Figur 1 dargestellten Sensoren 7, 9. So kann z.B. die Umgebungsbeleuchtung und/oder die vorherrschende Ortsfrequenz gemessen werden (vgl. Schritt 405). Die optische Wirkung der Brillenlinse wird dann mit den z.B. in der Speichereinrichtung 4 nach der Figur 1 abgelegten Solleinstelldaten und in Abhängigkeit von den Messwerten eingestellt (Schritt 407), indem zuvor die optimale Sollwirkung unter Berücksichtigung der gemessenen Umgebungsbedingung und insbesondere der Umgebungsbeleuchtung und/oder der vorherrschenden Ortsfrequenz bestimmt wurde (Schritt 406). Das Ergebnis ist eine Brille mit im Idealfall stets an die momentanen Bedürfnisse angepasster optischer Wirkung (Schritt 408).

## Patentansprüche

1. Vorrichtung (100)
- mit einer Brillenlinse (2) mit veränderbarer optischer Wirkung
- mit einer Wirkungseinstelleinrichtung (3) zum Einstellen der optischen Wirkung der Brillenlinse (2) anhand von Solleinstelldaten,
**gekennzeichnet durch**
- eine Speichereinrichtung (4) zum Speichern von ersten Solleinstelldaten zum Einstellen einer ersten vorbestimmten, aus einer ersten Refraktionsmessung an einem Auge eines Brillenträgers, für den die Brillenlinse (1) bestimmt ist, ermittelten optischen Sollwirkung und von zweiten Solleinstelldaten zum Einstellen einer zweiten vorbestimmten, aus einer zweiten Refraktionsmessung an dem Auge ermittelten optischen Sollwirkung,
- mit einer Zuführeinrichtung (5), um die ersten Solleinstelldaten oder die zweiten Solleinstelldaten der Wirkungseinstelleinrichtung (3) zuzuführen.

2. Vorrichtung (100) nach Anspruch 1, **dadurch gekennzeichnet, dass** die erste optische Sollwirkung eine aus einer unter einer ersten Umgebungsbeleuchtungsbedingung durchgeführten Refraktionsmessung an dem Auge ermittelte optische Wirkung ist und dass die zweite optische Sollwirkung eine aus einer unter einer von der ersten Umgebungsbeleuchtungsbedingung abweichenden zweiten Umgebungsbeleuchtungsbedingung durchgeführten Refraktionsmessung an dem Auge ermittelte optische Wirkung ist.

3. Vorrichtung (100) nach einem der vorangegangenen Ansprüche, **dadurch gekennzeichnet, dass** die erste optische Sollwirkung eine aus einer unter einer ersten Kontrastbedingung durchgeführten Refraktionsmessung an dem Auge ermittelte Wirkung ist und dass die zweite optische Sollwirkung eine aus einer unter einer zweiten von der ersten Kontrastbedingung abweichenden zweiten Kontrastbedingung durchgeführten Refraktionsmessung an dem Auge ermittelte Wirkung ist.

4. Vorrichtung (100) nach einem der vorangegangenen Ansprüche, **gekennzeichnet durch**
- eine Umschalteinrichtung (6) zum Umschalten der Zuführeinrichtung (5) zwischen dem Zuführen der ersten Solleinstelldaten und dem Zuführen der zweiten Solleinstelldaten.

5. Vorrichtung (100) nach Anspruch 4, **gekennzeichnet durch**
- einen Umgebungsbeleuchtungssensor (7) zum Bestimmen eines Maßes für ein Beleuchtungsverhältnis in einer Umgebung der die Brillenlinse (2) tragenden Person und
- eine Umgebungsbeleuchtungssteuereinrichtung (8) zum Ansteuern der Umschalteinrichtung (6) in Abhängigkeit von dem bestimmten Maß für das Beleuchtungsverhältnis in der Umgebung der die Brillenlinse (2) tragenden Person.

6. Vorrichtung (100) nach einem der Ansprüche 4 oder 5, **gekennzeichnet durch**
- einen Umgebungskontrastbestimmungseinrichtung (9) zum Bestimmen eines Maßes für ein Kontrastverhältnis in einer Umgebung der die Brillenlinse (2) tragenden Person und
- eine Kontrastverhältnissteuereinrichtung (10) zum Ansteuern der Umschalteinrichtung (6) in Abhängigkeit von dem bestimmten Maß für das Kontrastverhältnis in der Umgebung der die Brillenlinse (2) tragenden Person.

7. Vorrichtung (100) nach einem der vorangegangenen Ansprüche, **gekennzeichnet durch**
- eine Recheneinrichtung (11) zum Berechnen von weiteren Solleinstelldaten zum Einstellen wenigstens einer weiteren optischen Sollwirkung aus den ersten Solleinstelldaten und/oder aus der ersten vorbestimmten optischen Sollwirkung und/oder aus den zweiten Solleinstelldaten und/oder aus der zweiten vorbestimmten optischen Sollwirkung, wobei
- die Zuführeinrichtung (5) zum Zuführen der weiteren Solleinstelldaten an die Wirkungseinstelleinrichtung (3) ausgebildet ist und wobei
- die Umschalteinrichtung (6) zum Umschalten der Zuführeinrichtung (5) zwischen dem Zuführen der ersten Solleinstelldaten und dem Zuführen der zweiten Solleinstelldaten und dem Zuführen der weiteren Solleinstelldaten ausgebildet ist.

8. Verfahren zum Einstellen der optischen Wirkung einer Brillenlinse (2) mit veränderbarer optischer Wirkung anhand von Solleinstelldaten, **dadurch gekennzeichnet, dass**
- erste Solleinstelldaten zum Einstellen einer ersten mittels einer ersten Refraktionsmessung an einem Auge eines Brillenträgers, für den die Brillenlinse (2) bestimmt ist, vorbestimmten optischen Sollwirkung und zweite Solleinstelldaten zum Einstellen einer zweiten mittels einer zweiten Refraktionsmessung an dem Auge vorbestimmten optischen Sollwirkung abgespeichert werden und dass
- die optische Wirkung der Brillenlinse (2) anhand der ersten Solleinstelldaten und/oder der zweiten Solleinstelldaten eingestellt wird.

9. Verfahren nach Anspruch 8, **dadurch gekennzeichnet, dass**
- die erste optische Sollwirkung aus einer unter einer ersten Umgebungsbeleuchtungsbedingung durchgeführten Refraktionsmessung an dem Auge ermittelt wird und dass
- die zweite optische Sollwirkung aus einer unter einer zweiten, von der ersten Umgebungsbeleuchtungsbedingung abweichenden Umgebungsbeleuchtungsbedingung durchgeführten Refraktionsmessung an dem Auge ermittelt wird.

10. Verfahren nach einem der Ansprüche 8 oder 9, **dadurch gekennzeichnet, dass**
- die erste optische Sollwirkung aus einer unter einer ersten Kontrastbedingung durchgeführten Refraktionsmessung an dem Auge ermittelt wird und dass
- die zweite optische Sollwirkung aus einer unter einer zweiten von der ersten Kontrastbedingung abweichenden zweiten Kontrastbedingung durchgeführten Refraktionsmessung and Auge ermittelt wird.

11. Verfahren nach einem der Ansprüche 8 bis 10, **dadurch gekennzeichnet, dass**
- die optische Wirkung der Brillenlinse zwischen der ersten optischen Sollwirkung und der zweiten optischen Sollwirkung umgeschaltet wird.

12. Verfahren nach Anspruch 11, **dadurch gekennzeichnet dass**
- eine Umgebungsbeleuchtung in einer Umgebung der die Brillenlinse tragenden Person bestimmt wird und dass
- die optische Wirkung der Brillenlinse zwischen der ersten optischen Sollwirkung und der zweiten optischen Sollwirkung in Anhängigkeit von der bestimmten Umgebungsbeleuchtung umgeschaltet wird.

13. Verfahren nach einem der Ansprüche 11 oder 12, **dadurch gekennzeichnet dass**
- ein Umgebungskontrast in einer Umgebung der die Brillenlinse tragenden Person bestimmt wird und dass
- die optische Wirkung der Brillenlinse zwischen der ersten optischen Sollwirkung und der zweiten optischen Sollwirkung in Anhängigkeit von dem bestimmten Umgebungskontrast umgeschaltet wird.

14. Verfahren nach einem der vorangegangenen Ansprüche, **dadurch gekennzeichnet, dass**
- aus den ersten Solleinstelldaten und/oder aus der ersten vorbestimmten optischen Sollwirkung und/oder aus den zweiten Solleinstelldaten und/oder aus der zweiten vorbestimmten optischen Sollwirkung weitere Solleinstelldaten zum Einstellen wenigstens einer weiteren optischen Sollwirkung berechnet werden,
- die optische Wirkung der Brillenlinse zusätzlich anhand der weiteren Solleinstelldaten eingestellt wird.
